# EUROPEAN PATENT SPECIFICATION

(11) **EP 2 645 523 B1**
(45) Date of publication and mention of the grant of the patent: **05.10.2016**
(21) Application number: 12305373.8
(22) Date of filing: 30.03.2012
(51) Int. Cl.: H02J 7/00, B60L 11/18, B60L 3/00, B60L 3/12

(54) **Battery charging system and method**
Batterieladesystem und -verfahren
Système et procédé de charge de batterie

(43) Date of publication of application: 02.10.2013
(73) Proprietor: EH Europe GmbH, 8001 Zürich (CH)
(72) Inventor: Kechmire, Mohamed, 62033 Arras (FR); Letome, David, 62033 Arras (FR)
(74) Representative: Williams, Rhys Nicholas

(56) References cited:
- EP-A2- 2 110 922
- DE-A1-102007 017 407
- FR-A1- 2 832 551
- FR-A1- 2 842 360

## Description

### Field of the Invention

The present invention concerns a system and method for charging batteries. More particularly, but not exclusively, this invention concerns a battery charging system and method including a wireless battery control device.

### Background of the Invention

Large industrial batteries may include a battery control device, the battery control device arranged to monitor and record the charging and discharging of the battery to which the battery control device is connected. The battery control device may send this information to a battery charger during the charging process and the information may be used to determine the optimum charging profile for the charging process.

Industrial users of batteries, for example, where batteries are used to power forklift trucks in warehouses, may have a battery charging room where a plurality of battery chargers are simultaneously used to charge a plurality of batteries. Each battery is connected to a single battery charger and in order for the optimum charging profile to be used by the battery charger, it must be able to communicate with the battery control device associated with the battery to which the charger is connected. If the battery control device is physically connected to the battery charger by a wired arrangement, there is no opportunity for confusion. However, wireless battery control devices are exist which may provide advantages over a wired connection. Such a wireless battery control device could be the commercially available WI-IQ device. The WI-IQ device is available from EnerSys EMEA, EH Europe GmbH, Lowenstrasse 32, 8001 Zurich, Switzerland and additional EnerSys sales entities across the world. In order for the battery charger to apply the correct charging profile to the battery, the battery charger must be able to correctly identify the battery to which the charger has been connected. If a plurality of battery chargers are charging a plurality of batteries, each battery including a wireless battery control device, it may be difficult for each battery charger to make this identification.

The present invention seeks to mitigate the above-mentioned problems.

EP 2 110 922 A2 discloses a method of identifying which battery is connected to a particular charger by supplying a pulsed current to the battery and sending a wireless interrogation signal including information relating to the parameters of the pulsed current to all the battery control devices. The battery control device that identifies receipt of the pulsed current is identified as being connected to the charger.

### Summary of the Invention

The present invention provides a method of identifying a battery provided with a wireless battery control device during a battery charging procedure comprising the following steps:
connecting the battery to a battery charger;
the battery charger supplying a first current to the battery;
the wireless battery control device measuring parameters relating to the first current;
the battery charger generating and sending a first wireless interrogation signal, the wireless interrogation signal including information relating to parameters of the first current;
the first wireless interrogation signal configured such that a wireless battery control device receiving the interrogation signal compares the information relating to the parameters of the current being received by the associated battery to the information relating to the parameters of the first current that was supplied by the battery charger, and the wireless battery control device sending back a first wireless response signal should the information relating to the parameters match, the battery charger (100) forming a link with any wireless battery control device (108) that emits a first wireless response signal, the battery charger (100) supplying a second current, the second current with parameters different to the parameters of the first current; and the battery charger (100) sending out a second wireless interrogation signal, the wireless interrogation signal including information relating to parameters of the second current; the second wireless interrogation signal configured such that a wireless battery control device (108) receiving the interrogation signal compares the information relating to the parameters of the current being received by the associated battery (102) to the information relating to the parameters of the second current that was supplied by the battery charger (100), and the wireless battery control device (108) sending back a second wireless response signal should the information relating to the parameters match, wherein the second interrogation signal is configured to cause a second wireless response signal to be sent only by wireless battery control devices (108) linked with the control unit.

The information relating to the parameters of the first current preferably include at least one of the parameters measured by the wireless battery control device.

The wireless response signal sent in response to the interrogation signal may include a unique identifier. If the information relating to the parameters detected at the wireless battery control device matches the information relating to the parameters of the first current that was supplied by the battery charger it implies that the current being received by the associated battery may have been sent from the battery charger. If the battery charger receives a wireless response signal from only one wireless battery control device, this indicates that the wireless battery control device is associated with the battery connected to the battery charger.

The method includes the step of forming a communications link with any wireless battery control device that emits a first wireless response signal. Throughout this application, where reference is made to the information relating to the parameters of the wireless response signal matching the information relating to the parameters of the current generated by the battery charger, the skilled person will appreciate that a margin of error is provided and exact matching is not necessary. The tolerance is to compensate for possible losses in the cables connecting the battery to the charger, and potential inaccuracies in measurements taken both at the battery charger and by the wireless battery control device. The skilled person will appreciate that the required tolerance therefore depends on each particular system being used, and the tolerances may be set during a calibration process. The specific description below includes example values of the tolerance levels into which matching parameters may fall. In order to confirm the correct wireless battery control device has been identified, or to continue the identification process if the battery charger receives two or more signals from wireless battery control devices, the method includes the step of: the battery charger supplying a second current, the second current with parameters different to the parameters of the first current; and the battery charger sending out a second wireless interrogation signal, the wireless interrogation signal including information relating to parameters of the second current; the second wireless interrogation signal configured such that a wireless battery control device receiving the interrogation signal compares the information relating to the parameters of the current being received by the associated battery to the information relating to the parameters of the second current that was supplied by the battery charger, and the wireless battery control device sending back a second wireless response signal should the information relating to the parameters match.

The method includes the step of the battery charger forming a communications link with any wireless battery control device that emits a first wireless response signal. The method also includes the step of the second interrogation signal being configured to cause a second wireless response signal to be sent only by wireless battery control devices linked with the control unit. The method may include the step of breaking a link with any wireless battery control device that does not emit a second wireless response signal.

The second signal may be a point-to-point request-answer communication, being sent only to the wireless battery control device/devices that responded to the first signal.

Repeating the interrogation cycle as described will eliminate at least some of the wireless response signals received by the battery charger that are sent from wireless battery control devices that are not associated with the battery connected to the battery charger. The interrogation cycle may be repeated until only a single wireless response signal is received by the battery charger.

Once the battery connected to the charger has been correctly identified by the method as described above, the battery charger may form a control link with the wireless battery control device associated with the battery. The wireless battery control device may provide battery charging and/or discharging information to the battery charger to allow the optimum charging profile to be applied. The wireless battery control device may be arranged to monitor and/or record information relating to:
- current output of the battery
- current received during a battery charge
- voltage output of the battery
- voltage at the battery during a battery charge
- battery temperature
- battery electrolyte levels
- number of charge/discharge cycles
- state of charge
Such information may be used by the battery charger to determine the optimum charging profile for the battery. In such an arrangement the battery charger may be the master unit and the wireless battery control device the slave unit.

Alternatively, the optimum charging profile may be determined by the wireless battery control device and sent to the battery charger once the wireless battery control device has been correctly identified and linked with the battery charger. In such an arrangement the wireless battery control device may be the master unit and the battery charger the slave unit.

A further aspect of the invention may provide a battery charger configured for use in the method as described above. The battery charger may comprise a control unit configured to emit and receive wireless signals, and control the charging profile of the battery charging process when a battery is connected to a battery charger. Alternatively, the battery control unit may be configured to be controlled by a wireless battery control device when an associated battery is connected to the battery charger.

A further aspect of the invention provides a wireless battery control device, the wireless battery control device configured for use in the method as described above.

A further aspect of the invention provides a battery charging system comprising: a battery charger comprising a control unit; and a battery provided with a wireless battery control device; wherein the battery charger and battery are configured for use as described in the method above.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a schematic representation of a battery charger and battery according to a first embodiment of the invention; and
- Figure 2: shows a flow chart showing a method of battery identification according to a first embodiment of the invention.

### Detailed Description

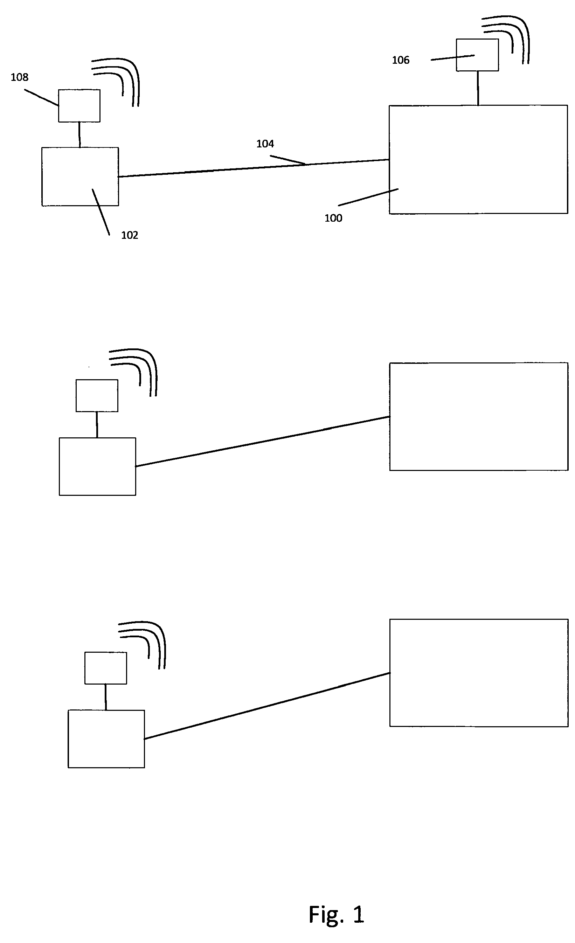

Figure 1 shows a schematic diagram of a battery charger 100 and battery 102. The battery charger 100 is connected to the battery 102 by charging leads 104. The battery charger includes a control unit 106 and the battery 102 includes a wireless battery control device (WBCD) 108. The wireless battery control device may be an EnerSys WI-IQ device as described above. The method described below allows the control unit 106 of the battery charger 100 to identify and form a control link with the wireless battery control device 108 that is associated with the battery 102. Figure 1 also shows a typical charging room setup with a number of other battery chargers and batteries that the battery charger 100 may mistakenly link with if not taking advantage of the present invention. The control unit 106 and wireless battery control device 108 are arranged to communicate wirelessly using the simple media access control (SMAC) of the Zigbee protocol operating at 2.4GHz. However, the skilled person will realise that any suitable wireless communication system and method may be used with routine implementation.

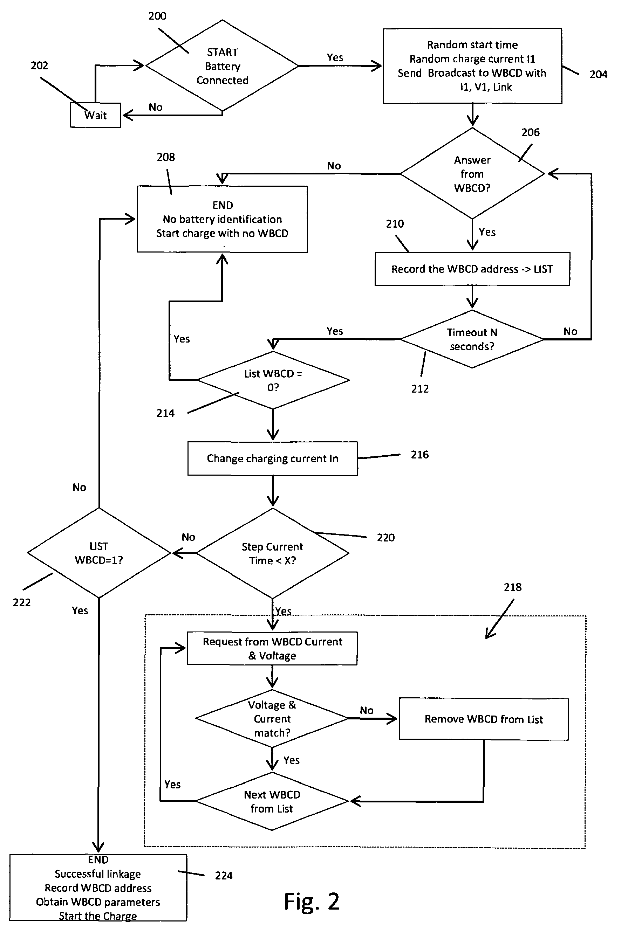

Figure 2 shows a flow diagram detailing a method of battery identification according to a first embodiment of the invention. The control unit 106 of the battery charger 100 first checks to see if a battery is connected to the battery charger 100, as shown in step 200. If no battery is connected, the control unit waits 202 before repeating step 200. If the control unit 106 detects that a battery is connected to the battery charger 100 it moves onto step 204. At step 204 the battery charger 100 generates and supplies a random current output to the battery 102 after a random delay. The random current may be from 5A to 140A depending on the rating of the charger 100. The random delay may range from 20 seconds, to 90 seconds, to any number of minutes. The purpose of the random delay is to prevent all of the chargers in a charging room starting at the same time after a power failure. If this were to happen there may be an unacceptably large surge in the power supply demand of the battery charging room or factory. The charger 100 sends out the random current after the random delay. Along with the random current the control unit 106 sends out a wireless interrogation signal to determine whether there are any wireless battery control units in range. The wireless interrogation signal includes the value of the random current generated, the voltage generated and a link request. The control unit 106 then waits to see if any answer is received in response of the interrogation signal, as shown at 206. If no response is received the control unit 106 instructs the battery charger 100 to begin the charging process without linking to a wireless battery control device, as shown in 208. If a wireless battery control device receives the interrogation signal, and that wireless battery control device is already linked to a battery charger, the wireless battery control device is arranged not to send a response to the interrogation signal. If the wireless battery control device is not already linked to a battery charger, and the current and voltage parameter information included in the interrogation signal match those being monitored by the wireless battery control device, a response signal is sent back to the charger, including a unique identifier for that wireless battery control device. The control unit 106 receives the response signal and records the unique identifier of the wireless battery control device as shown in 210. The wireless battery control device determines that the current and voltage parameter information matches that included in the interrogation signal if the current is within ±5A and the voltage within ±4V. This allows for inaccuracies in the readings taken by the wireless battery control device and/or cable losses between the battery and the battery charger.

After waiting a predetermined time 212, the control unit 106 checks to see whether the details of any wireless battery control devices have been recorded, as shown at 214. If zero wireless battery control devices have been recorded, the charging process begins without reference to any link to a wireless battery control device, as shown at 208. If at least one wireless battery control device has been recorded the battery control unit 106 moves to step 216. The control unit 106 then changes the current being produced by the battery charger 100. The battery charger 100 sends a second wireless interrogation signal to each of the wireless battery control devices that it has previously recorded. The interrogation signal asks each of the wireless battery control devices in the list if the current and voltage they are monitoring matches that being supplied by the battery charger 100. If the current and voltage do match, to within the tolerances mentioned above, then the wireless battery control device sends a second wireless response signal to the battery charger 100 and the battery remains on the list recorded by the control unit 106. If the current and voltage do not match, the wireless battery control device does not send a second wireless response signal and that battery is removed from the list. This is shown in the cycle 218. Once each of the initially recorded wireless battery control devices have been checked and removed as appropriate, the control device 106 returns to step 214. The cycle is repeated for a set amount of time 220, which may range from 30 seconds to two minutes. After the set amount of time has expired the control unit checks whether the number of recorded wireless battery control units is equal to one, as shown in step 222. If so, the control unit 106 forms a control link with the wireless battery control device and receives information relating to the battery 102 to which the battery charger 100 is connected, as shown in step 224. This information is used to optimise the charging process of the battery 102. If the number of wireless battery control devices recorded is not equal to one, then the control unit 106 goes to step 208 and the charging process is started without linking the control unit 106 to a wireless battery control device.

By cycling through various outputs, and comparing those outputs to what each wireless battery control device is monitoring as an input on their associated battery, the method is able to eliminate the wireless battery control devices that are not connected to the right battery. While it is possible that two wireless battery control devices would be registering the same current and/or voltage at one time, once the battery charger output has changed, the wireless battery control device that is connected to the battery charger will register different current/voltage values.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of identifying a battery (102) provided with a wireless battery control device (108) during a battery charging procedure comprising the following steps:
connecting the battery (102) to a battery charger (100);
the battery charger (100) supplying a first current to the battery (102);
the wireless battery control device (108) measuring parameters relating to the first current;
the battery charger (100) generating and sending a first wireless interrogation signal, the wireless interrogation signal including information relating to parameters of the first current;
a wireless battery control device (108) receiving the first interrogation signal compares the information relating to the parameters of the current being received by the associated battery (102) to the information relating to the parameters of the first current that was supplied by the battery charger (100), and the wireless battery control device (108) sending back a first wireless response signal should the information relating to the parameters match, the battery charger (100) forming a link with any wireless battery control device (108) that emits a first wireless response signal, the battery charger (100) supplying a second current, the second current with parameters different to the parameters of the first current; **characterised by** further comprising the following steps: the battery charger (100) sending out a second wireless interrogation signal, the wireless interrogation signal including information relating to parameters of the second current;
a wireless battery control device (108) receiving the second interrogation signal compares the information relating to the parameters of the current being received by the associated battery (102) to the information relating to the parameters of the second current that was supplied by the battery charger (100), and the wireless battery control device (108) sending back a second wireless response signal should the information relating to the parameters match,
wherein the second interrogation signal is configured to cause a second wireless response signal to be sent only by wireless battery control devices (108) linked with the control unit.

2. A method as claimed in claim 1, in which the wireless response signal sent in response to the interrogation signal includes a unique identifier.

3. A method as claimed in claim 1 or claim 2, including the step of breaking a link with any wireless battery control device (108) that does not emit a second wireless response signal in response to the second interrogation signal.

4. A method as claimed in any preceding claim, wherein the battery charger (100) is arranged to set up a point-to-point request-answer communication with any wireless battery control device (108) which sends back a first wireless response signal.

5. A method according to any preceding claim, including the step of repeating the interrogation signal and wireless response signal cycle until only a single wireless response signal is received by the battery charger (100).

6. A method as claimed in claim 5, wherein the battery charger (100) forms a control link with the single battery control device.

7. A method as claimed in claim 6, including the additional step of the single battery control device (108) sending a battery charging profile to the battery charger (100).

8. A battery charger configured for use in the method of any of claims 1 to 7.

9. A battery charger as claimed in claim 8, the battery charger (100) comprising a control unit configured to emit and receive wireless signals, and control the charging profile of the battery charging process when a battery (102) is connected to the battery charger (100).

10. A battery charger as claimed in claim 8, the battery charger (100) comprising a control unit (106) configured to emit and receive wireless signals, and the control unit (106) being configured to be controlled by a wireless battery control device (108) when an associated battery (102) is connected to the battery charger (100).

11. A wireless battery control device (108), the wireless battery control device (108) configured for use in the method as claimed in any of claims 1 to 7.

12. A battery charging system comprising:
a battery charger (100) comprising a control unit; and
a battery (102) provided with a wireless battery control device (108); wherein the battery charger and battery are configured for use as described in any of the claims 1 to 7.

## Patentansprüche

1. Verfahren zum Identifizieren einer Batterie (102), versehen mit einer drahtlosen Batterieregeleinrichtung (108), während eines Batterieladevorgangs, umfassend die folgenden Schritte:
Anschließen der Batterie (102) an ein Batterieladegerät (100);
Liefern eines ersten Stroms an die Batterie (102) durch das Batterieladegerät (100);
Messen von den ersten Strom betreffenden Parametern durch die drahtlose Batterieregeleinrichtung (108);
Erzeugen und Senden eines ersten drahtlosen Abfragesignals durch das Batterieladegerät (100), wobei das drahtlose Abfragesignal Informationen einschließt,
die Parameter des ersten Stroms betreffen;
Vergleichen, durch eine das erste Abfragesignal empfangende drahtlose Batterieregeleinrichtung (108), der die Parameter des durch die zugehörige Batterie (102) empfangenen Stroms betreffenden Informationen mit den die Parameter des durch das Batterieladegerät (100) gelieferten ersten Stroms betreffenden Informationen, und Zurücksenden eines ersten drahtlosen Antwortsignals durch die drahtlose Batterieregeleinrichtung (108), sollten die die Parameter betreffenden Informationen passen, Aufbauen, durch das Batterieladegerät (100), einer Verbindung mit jeder drahtlosen Batterieregeleinrichtung (108), die ein erstes drahtloses Antwortsignal aussendet, Liefern eines zweiten Stroms durch das Batterieladegerät (100), wobei der zweite Strom Parameter aufweist, die sich von den Parametern des ersten Stroms unterscheiden; **gekennzeichnet durch** das zusätzliche Umfassen der folgenden Schritte:
Aussenden eines zweiten drahtlosen Abfragesignals **durch** das Batterieladegerät (100), wobei das drahtlose Abfragesignal Informationen einschließt, die Parameter des zweiten Stroms betreffen;
Vergleichen, **durch** eine das zweite Abfragesignal empfangende drahtlose Batterieregeleinrichtung (108), der die Parameter des **durch** die zugehörige Batterie (102) empfangenen Stroms betreffenden Informationen mit den die Parameter des durch das Batterieladegerät (100) gelieferten zweiten Stroms betreffenden Informationen, und Zurücksenden eines zweiten drahtlosen Antwortsignals **durch** die drahtlose Batterieregeleinrichtung (108), sollten die die Parameter betreffenden Informationen passen, wobei das zweite Abfragesignal so konfiguriert ist, dass es bewirkt, dass ein zweites drahtloses Antwortsignal nur **durch** mit der Regeleinheit verbundene drahtlose Batterieregeleinrichtungen (108) gesendet wird.

2. Verfahren nach Anspruch 1, bei dem das als Antwort auf das Abfragesignal gesendete drahtlose Antwortsignal einen eindeutigen Bezeichner einschließt.

3. Verfahren nach Anspruch 1 oder Anspruch 2, einschließend den Schritt des Abbrechens einer Verbindung mit jeder drahtlosen Batterieregeleinrichtung (108), die kein zweites drahtloses Antwortsignal als Antwort auf das zweite Abfragesignal aussendet.

4. Verfahren nach einem der vorangehenden Ansprüche, wobei das Batterieladegerät (100) so angeordnet ist, dass es eine Punkt-zu-Punkt-Anfrage-Antwort-Kommunikation mit jeder drahtlosen Batterieregeleinrichtung (108), die ein erstes drahtloses Antwortsignal zurücksendet, aufbaut.

5. Verfahren nach einem der vorangehenden Ansprüche, einschließend den Schritt des Wiederholens des Zyklus aus Abfragesignal und drahtlosem Antwortsignal, bis nur ein einziges drahtloses Antwortsignal durch das Batterieladegerät (100) empfangen wird.

6. Verfahren nach Anspruch 5, wobei das Batterieladegerät (100) eine Regelverbindung mit der einzigen Batterieregeleinrichtung aufbaut.

7. Verfahren nach Anspruch 6, einschließend den zusätzlichen Schritt des Sendens eines Batterieladeprofils durch die einzige Batterieregeleinrichtung (108) an das Batterieladegerät (100).

8. Batterieladegerät, konfiguriert für die Verwendung in dem Verfahren nach einem der Ansprüche 1 bis 7.

9. Batterieladegerät nach Anspruch 8, wobei das Batterieladegerät (100) eine Regeleinheit umfasst, die so konfiguriert ist, dass sie drahtlose Signale aussendet und empfängt und das Ladeprofil des Batterieladeprozesses regelt, wenn eine Batterie (102) an das Batterieladegerät (100) angeschlossen ist.

10. Batterieladegerät nach Anspruch 8, wobei das Batterieladegerät (100) eine Regeleinheit (106) umfasst, die so konfiguriert ist, dass sie drahtlose Signale aussendet und empfängt, und wobei die Regeleinheit (106) so konfiguriert ist, dass sie durch eine drahtlose Batterieregeleinrichtung (108) geregelt wird, wenn eine zugehörige Batterie (102) an das Batterieladegerät (100) angeschlossen ist.

11. Drahtlose Batterieregeleinrichtung (108), wobei die drahtlose Batterieregeleinrichtung (108) für die Verwendung in dem Verfahren nach einem der Ansprüche 1 bis 7 konfiguriert ist.

12. Batterieladesystem, umfassend:
ein Batterieladegerät (100), umfassend eine Regeleinheit; und
eine Batterie (102), versehen mit einer drahtlosen Batterieregeleinrichtung (108);
wobei das Batterieladegerät und die Batterie für die in einem der Ansprüche 1 bis 7 beschriebene Verwendung konfiguriert sind.

## Revendications

1. Procédé d'identification d'une batterie (102) munie d'un dispositif de commande de batterie sans fil (108) pendant une procédure de charge de batterie, comprenant les étapes suivantes :
connexion de la batterie (102) avec une chargeur de batterie (100) ;
le chargeur de batterie (100) introduisant un premier courant dans la batterie (102) ;
le dispositif de commande de batterie sans fil (108) mesurant des paramètres concernant le premier courant ;
le chargeur de batterie (100) générant et envoyant un premier signal d'interrogation sans fil, le signal d'interrogation sans fil contenant des informations concernant les paramètres du premier courant ;
un dispositif de commande de batterie sans fil (108) recevant le premier signal d'interrogation compare les informations concernant les paramètres du courant reçu par la batterie associée (102) aux informations concernant les paramètres du premier courant qui a été introduit par le chargeur de batterie (100) et le dispositif de commande de batterie sans fil (108) envoyant en retour un premier signal de réponse sans fil si les informations concernant les paramètres correspondent, le chargeur de batterie (100) établissant une liaison avec un dispositif de commande de batterie sans fil (108) qui émet un premier signal de réponse sans fil, le chargeur de batterie (100) introduisant un deuxième courant, le deuxième courant présentant des paramètres différents des paramètres du premier courant ; **caractérisé en ce qu'**il comprend en outre les étapes suivantes : le chargeur de batterie (100) envoyant un deuxième signal d'interrogation sans fil, le signal d'interrogation sans fil contenant des informations concernant les paramètres du deuxième courant ;
**caractérisé en ce qu'**il comprend les étapes suivantes :
un dispositif de commande de batterie sans fil (108) recevant le deuxième signal d'interrogation compare les informations concernant les paramètres du courant reçu par la batterie associée (102) aux informations concernant les paramètres du deuxième courant qui a été introduit par le chargeur de batterie (100) et le dispositif de commande de batterie sans fil (108) envoyant en retour un deuxième signal de réponse sans fil si les informations concernant les paramètres correspondent, le deuxième signal d'interrogation étant conçu pour faire en sorte qu'un deuxième signal de réponse sans fil soit envoyé uniquement par les dispositifs de commande de batterie (108) liés à l'unité de commande.

2. Procédé selon la revendication 1, dans lequel le signal de réponse sans fil envoyé en réponse au signal d'interrogation contient un identifiant unique.

3. Procédé selon la revendication 1 ou la revendication 2, comprenant l'étape de rupture d'une liaison avec un dispositif de commande de batterie sans fil (108) qui n'émet pas un deuxième signal de réponse sans fil en réponse au deuxième signal d'interrogation.

4. Procédé selon l'une des revendications précédentes, dans lequel le chargeur de batterie (100) est conçu pour établir une communication question-réponse point-à-point avec un dispositif de commande de batterie sans fil (108) qui envoie en retour un premier signal de réponse sans fil.

5. Procédé selon l'une des revendications précédentes, comprenant l'étape de répétition du cycle de signal d'interrogation et de signal de réponse sans fil jusqu'à ce qu'un seul signal de réponse sans fil soit reçu par le chargeur de batterie (100).

6. Procédé selon la revendication 5, dans lequel le chargeur de batterie (100) établit une liaison de commande avec le simple dispositif de commande de batterie.

7. Procédé selon la revendication 6, comprenant l'étape supplémentaire du simple dispositif de commande de batterie (108) envoyant un profil de charge de batterie au chargeur de batterie (100).

8. Chargeur de batterie conçu pour une utilisation dans le procédé de l'une des revendications 1 à 7.

9. Chargeur de batterie selon la revendication 8, le chargeur de batterie (100) comprenant une unité de commande conçue pour émettre et recevoir des signaux sans fil et commander le profil de charge du processus de charge de la batterie lorsqu'une batterie (102) est connectée au chargeur de batterie (100).

10. Chargeur de batterie selon la revendication 8, le chargeur de batterie (100) comprenant une unité de commande (106) conçue pour émettre et recevoir des signaux sans fil et l'unité de commande (106) étant conçue pour être commandée par un dispositif de commande de batterie sans fil (108) lorsqu'une batterie associée (102) est connectée au chargeur de batterie (100).

11. Dispositif de commande de batterie sans fil (108), le dispositif de commande de batterie sans fil (108) étant conçu pour une utilisation dans le procédé selon l'une des revendications 1 à 7.

12. Système de charge de batterie comprenant :
un chargeur de batterie (100) comprenant une unité de commande ; et
une batterie (102) munie d'un dispositif de commande de batterie sans fil (108) ; le chargeur de batterie et la batterie étant conçus pour une utilisation décrite dans une des revendications 1 à 7.
